# EUROPEAN PATENT APPLICATION

(11) **EP 1 909 478 A2**
(43) Date of publication of application: **09.04.2008**
(21) Application number: 07110945.8
(22) Date of filing: 25.06.2007
(51) Int. Cl.: H04N 1/04, H04N 1/207

(54) **Multifunctional peripheral**

(30) Priority: 29.09.2006 KR 20060096369
(71) Applicant: Samsung Electronics Co., Ltd., Suwon-si, Gyeonggi-Do (KR)
(72) Inventor: Roh, Hee-yuel 516-1006, Sinnamusil 5 danji Apartment,, Suwon-si, Gyeonggi-do (KR); Park, Heon-soo, Budang-gu, Seongnam-si, Gyeonggi-do (KR); Kim, Soo-hyun 906-801, Byeokjeokgol 9danji Apt.,, Suwon-si, Gyeonggi-do (KR)
(74) Representative: Clark, Charles Robert

(57) **Abstract**

A multifunction peripheral in which a scanning unit and a printing unit can be driven by a single driving unit, including a printing unit which is movably installed in a main body of the multifunction peripheral to print a predetermined image onto a printing medium, a driving unit to drive the printing unit, a scanning unit which is movably installed in the main body of the multifunction peripheral to scan an image of a document placed on a document table, and a linking unit to link the scanning unit to the movement of the printing unit.

## Description

The present general inventive concept relates to a multifunction peripheral. In particular, but not exclusively, the peripheral device is arranged to perform operations such as printing, copying, and scanning in a single system.

Conventional multifunction peripherals comprise printers and scanners for printing and for scanning images of documents, respectively. The printer component of the peripheral comprises printing units which have a plurality of nozzles ejecting inks onto printing media, and transferring units which are disposed opposite the printing units in order to transfer printing media being printed. The scanner component of the peripheral comprises scanning units which scan images of documents placed on document tables formed of transparent flat plates.

The printers and scanners having the above configuration comprise movable printing and scanning units, respectively. Accordingly, separate driving means are required to drive each of the printing and scanning units.

Specifically, conventional multifunction peripherals comprise printing unit driving motors and scanning unit driving motors which provide the driving force for the printing and scanning units, respectively, and printing unit driving members and scanning unit driving members which receive the driving force to drive the printing and scanning units, respectively.

Therefore, since the printers and scanners are driven individually by separate driving means, the multifunction peripherals become structurally complicated. As a result, an increase in the number of parts of multifunction peripherals causes the volume and manufacturing costs of multifunction peripherals to increase.

The present general inventive concept provides a multifunction peripheral in which a scanning unit and a printing unit can be driven by a single driving unit.

The foregoing and/or other aspects and utilities of the present general inventive concept are achieved by providing a multifunction peripheral, comprising: a printing unit movably installed in a main body of the multifunction peripheral and being arranged to print a predetermined image onto a printing medium; a scanning unit movably installed in the main body of the multifunction peripheral and being arranged to scan an image of a document placed on a document table; a linking unit arranged to link the scanning unit and/or the printing unit to a driving unit arranged to selectively drive the printing unit or scanning unit coupled thereto.

The foregoing and/or other aspects and utilities of the present general inventive concept are achieved by providing a multifunction peripheral including a printing unit movably installed in a main body of the multifunction peripheral to print a predetermined image onto a printing medium, a driving unit to drive the printing unit, a scanning unit movably installed in the main body of the multifunction peripheral to scan an image of a document placed on a document table, and a linking unit to link the scanning unit to the movement of the printing unit.

The linking unit may include a linking member which is selectively connected to the printing unit, and a controller to control the connection between the printing unit and scanning unit.

The linking member may include an electromagnet, which is selectively connected to the printing unit by a magnetic force generated from an external voltage. The controller may control a voltage supplied to the linking member in response to a scanning signal.

The driving unit may include a driving motor, a driving belt to support the printing unit and drive the printing unit using a driving force of the driving motor, and a printing unit guide bar to support and guide the movement of the printing unit.

The scanning unit may be guided by a scanning unit guide bar which is disposed parallel to the printing unit guide bar.

The multifunction peripheral may include a transferring unit to transfer the printing medium on which the image is printed by the printing unit.

The transferring unit may include a charging roller to charge the printing medium, and an absorption belt to move in contact with the charging roller to absorb (or grip) and transfer the charged printing medium.

The printing unit may print multiple copies of the image onto the printing medium while moving back and forth at least once in each region among two or more regions into which an image region formed on the printing medium is divided.

The printing unit may also move in a direction orthogonal to the direction in which the printing medium moves.

The printing unit may be an array head having a plurality of nozzles.

The foregoing and/or other aspects and utilities of the present general inventive concept may also be achieved by providing a multifunction peripheral, including a printing unit movably installed in a main body of the multifunction peripheral to print a predetermined image onto a printing medium, a driving unit to drive the printing unit, and a scanning unit to be removeably coupled to the printing unit to scan an image of a document placed on a document table.

The multifunction peripheral may further include a controller to couple the scanning unit to the printing unit based on a received scanning signal.

The driving unit may drive the scanning unit when the scanning unit is coupled to the printing unit.

The foregoing and/or other aspects and utilities of the present general inventive concept may be achieved by providing a multifunction peripheral including a printing unit to print a predetermined image onto a printing medium, a scanning unit to scan an image of a document placed on a document table, and a linking member to link the printing unit to the scanning unit based on a received scanning signal.

The foregoing and/or other aspects and utilities of the present general inventive concept may be achieved by providing a multifunctional apparatus with a plurality of peripheral devices, including a linking unit to selectively connect the plurality of peripheral devices together based on a signal to perform a function of one of the plurality of peripheral devices, and a driving unit to drive the plurality of peripheral devices in the connected stage.

The plurality of peripheral devices may include a printing unit to print a predetermined image onto a printing medium, and a scanning unit to scan an image of a document placed on a document table.

The foregoing and/or other aspects and utilities of the present general inventive concept may be achieved by providing a linking unit of a multifunctional apparatus with a plurality of peripheral devices, including a linking member to selectively connect the plurality of peripheral devices, and a controller to control the linking member to connect the plurality of peripheral devices based on a signal to perform predetermined functions of the plurality of peripheral devices.

The linking member may include an electromagnet to selectively connect the plurality of peripheral devices by a magnetic force generated from an external voltage, and the controller may control a voltage supplied to the linking member in response to a signal to perform one of the predetermined functions of the plurality of peripheral devices.

The foregoing and/or other aspects and utilities of the present general inventive concept may be achieved by providing a method of performing printing and scanning functions in a multifunction peripheral, the method including moving a printing unit to print an image on a printing medium based on a received signal to perform the printing, connecting a scanning unit to the printing unit based on a received signal to scan the image, and moving the connected printing unit and scanning unit to scan an image from a document.

The moving of the connected printing unit and scanning unit may be performed by a driving unit.

Embodiments of the present invention are now described by way of example, with reference to the accompanying drawings of which:
Figure 1 is a schematic perspective view illustrating a multifunction peripheral according to an exemplary embodiment of the present general inventive concept;
Figure 2 is a close-up perspective view illustrating a linking unit according to an exemplary embodiment of the present general inventive concept; and
Figures 3A and 3B are schematic views illustrating driving states of a printing unit and a scanning unit.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

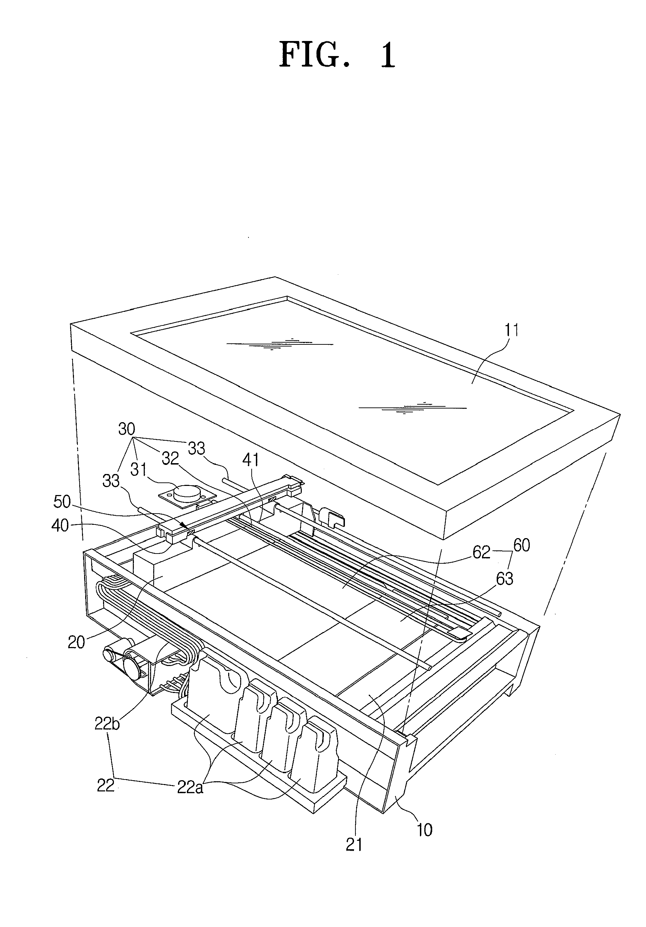

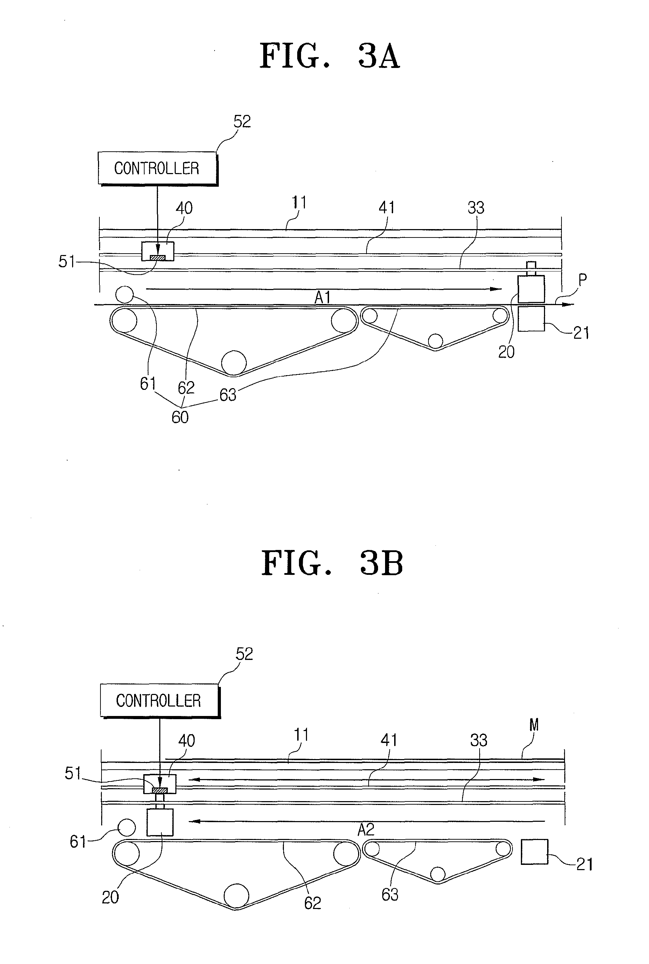

As illustrated in Figures 1 through 3B, a multifunction peripheral according to an exemplary embodiment of the present general inventive concept includes a main body 10, a printing unit 20, a driving unit 30, a scanning unit 40, and a linking unit 50.

The main body 10 includes a document table 11 formed of a transparent flat plate, on which a document M can be placed. The printing unit 20 and the scanning unit 40 can be installed in the main body 10.

The printing unit 20 is movably installed in the main body 10 to print an image signal received from the outside onto a printing medium P. The printing unit 20 may be an array head (not illustrated) having a plurality of nozzles arranged crosswise on the printing medium P to spit or eject ink onto the printing medium P to print an image. However, the printing unit 20 need not be an array head, and any of various printing methods can be employed.

Ink is supplied to the printing unit 20 by an ink supplier 22, which consists of an ink reservoir 22a containing ink, and a supply hose 22b to supply ink from the ink reservoir 22a to the printing unit 20. The printing unit 20 may receive ink from the ink reservoir 22a, which is provided separately from the main body 10. A detailed description of technical configurations of a conventional separation type ink supplier 22 has been omitted for conciseness and clarity.

The ink supplier 22 need not be a separation type ink supplier, and the printing unit 20 and ink supplier 22 can be integrally formed. Additionally, a plurality of ink reservoirs 22a can be provided to perform multi-color printing, and a single ink reservoir 22a can be provided to perform single color printing.

The printing unit 20 is installed facing a platen 21, on which the printing medium P can be placed flat, to print an image on the printing medium P while in a fixed position or while moving lengthwise along the printing medium P. A maintenance unit (not illustrated) may be installed in the platen 21 to perform capping and wiping of the nozzles of the printing unit 20.

A detailed description of technical configurations of the printing unit 20 to print an image by spitting ink on the printing medium P has been omitted for conciseness and clarity.

A transferring unit 60 transfers the printing medium P on which an image is printed by the printing unit 20. The transferring unit 60 may include a charging roller 61, a first absorption belt 62 and a second absorption belt 63.

The charging roller 61 charges the printing medium P and receives a voltage from a voltage applier (not illustrated).

The first absorption belt 62 and the second absorption belt 63 move in contact with the charging roller 61 to electrostatically grip and transfer the charged printing medium P. The first absorption belt 62 and the second absorption belt 63 may move according to the printing region of the printing medium P.

The driving unit 30 drives the printing unit 20, and includes a driving motor 31, a driving belt 32 and a printing unit guide bar 33.

The driving motor 31 provides a driving force to drive the printing unit 20. The driving belt 32 is moved by the driving force of the driving motor 31 to drive the printing unit 20 while supporting the printing unit 20.

The printing unit guide bar 33 supports and guides the movement of the printing unit 20. A pair of printing guide bars 33 may be installed to guide the printing unit 20.

To obtain a high-resolution image, an image region formed on the printing medium P may be divided into at least two regions, and the printing unit 20 as configured above may be driven by the driving unit 30 to move back and forth at least once in each region. Accordingly, the printing unit 20 may move back and forth over a single image multiple times to print multiple copies of the image onto the printing medium P.

Additionally, when one nozzle among a plurality of nozzles of the printing unit 20 is clogged, the printing unit 20 may be operated to move horizontally across the printing medium P. Accordingly, there may be provided a second driving motor (not illustrated) to drive the printing unit 20 to move horizontally across the printing medium P, and a separate driving member to move the printing unit 20 in a direction orthogonal to the direction in which the printing medium P moves using a driving force of the second driving motor. Detailed descriptions and drawings of technical configurations of the above components have been omitted for conciseness and clarity.

The scanning unit 40 is movably installed in the main body 10 to scan an image of a document M placed on the document table 11. The scanning unit 40 may include a light sensor, such as a contact image sensor (CIS) or a charge coupled device (CCD), to detect light reflected from the document M by irradiating light to the document M. A detailed description of technical configurations of the scanning unit 40 has been omitted for conciseness and clarity.

As illustrated in Figures 3A and 3B, the scanning unit 40 and printing unit 20 are movably and laminatedly disposed in parallel with each other in the main body 10. Specifically, the scanning unit 40 is disposed on a lower part of the document table 11, and the printing unit 20 is disposed on a lower part of the scanning unit 40. Movement of the scanning unit 40 may be guided by a scanning unit guide bar 41 which is disposed parallel to the printing unit guide bar 33.

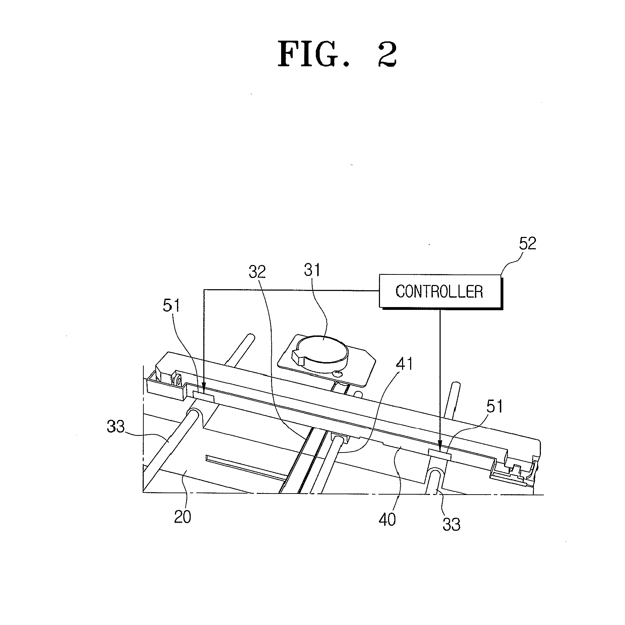

The linking unit 50 links the scanning unit 40 to the printing unit 20 being moved by the driving unit 30. The linking unit 50 includes a linking member 51 and a controller 52, as illustrated in Figure 2.

The linking member 51 is disposed on a lower surface of the scanning unit 40, to be selectively connected to an upper surface of the printing unit 20. Such a linking member 51 may include an electromagnet, which can be selectively connected to the printing unit 20 by a magnetic force generated from an external voltage. Accordingly, the printing unit 20, which is connected to the linking member 51 including an electromagnet, may be made of metals.

The controller 52 controls the voltage supplied to the linking member 51 in response to a scanning signal received from the outside, and also controls the connection between the printing unit 20 and the scanning unit 40. The scanning signal may be input through an input key mounted on the outside of the main body 10 or through an external input means, such as a computer, which may be connected to the multifunction peripheral.

An exemplary embodiment of the present general inventive concept provides the linking unit 50 including the linking member 51 including an electromagnet and the controller 52 to control the connection between the printing and scanning units 20 and 40, but the configuration of the multifunction peripheral is not necessarily limited thereto. Specifically, in the same manner as a locking projection is formed on the lower surface of the scanning unit 40 and a locking groove is formed on the upper surface of the printing unit 20, it is necessary to adopt one of various connecting means to selectively connect the scanning unit 40 to the printing unit 20 in response to the scanning signal outside the multifunction peripheral.

The printing and scanning operations of the multifunction peripheral as structured above will be described with reference to Figures 3A and 3B.

In Figure 3A, the printing unit 20 moves in a direction indicated by an arrow A1 to be disposed on an upper part of the platen 21. If the printing medium is gripped by the first absorption belt 62 and the second absorption belt 63 with the electrostatic force generated between the charged printing medium P (charged by the charging roller 61) and the absorption belt, and is transferred toward the platen 21, the printing unit 20 spits ink to print a predetermined image onto the printing medium P.

If a user intends to print multiple copies of the image onto the printing medium P, movements of the first absorption belt 62 and the second absorption belt 63 are paused to stop the transfer of the printing medium P. Thereafter, the printing unit 20 is operated to move back and forth lengthwise along the printing medium P to print multiple copies of the image.

If the scanning signal is input from outside the multifunction peripheral, the printing unit 20 may move in a direction indicated by an arrow A2 to be displaced at a lower part of the scanning unit 40, as illustrated in Figure 3B. The controller 52 enables a predetermined voltage to be applied to the linking member 51, and the linking member 51 exerts a magnetic force. Accordingly, the lower surface of the scanning unit 40 and the upper surface of the printing unit 20 become interconnected.

The scanning unit 40 connected to the printing unit 20 scans the image of the document M while being moved along the scanning unit guide bar 41 using a driving force of the driving motor 31 and the movement of the driving belt 32.

As described above, the present general inventive concept provides a printing unit and a scanning unit which are selectively linked so that the printing unit and scanning unit may be driven by a single driving means. Accordingly, a multifunction peripheral has a simple structure, and thus, it is possible to make full use of space and reduce manufacturing costs.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. A multifunction peripheral, comprising:
a printing unit movably installed in a main body of the multifunction peripheral and being arranged to print a predetermined image onto a printing medium;
a scanning unit movably installed in the main body of the multifunction peripheral and being arranged to scan an image of a document placed on a document table;
a linking unit arranged to link the scanning unit and/or the printing unit to a driving unit, wherein the driving unit is arranged to selectively drive one or more of the printing unit and scanning unit.

2. The device according to claim 1, wherein the drive unit is adapted to drive the printing unit and the linking unit is arranged to link the scanning unit to the movement of the printing unit.

3. The multifunction peripheral as claimed in claim 1 or 2, wherein the linking unit comprises:
a linking member arranged to selectively connect to the printing unit; and
a controller arranged to control the connection between the printing unit and scanning unit.

4. The multifunction peripheral as claimed in claim 1, 2 or 3, wherein:
the linking member comprises an electromagnet arranged to selectively connect to the printing unit by a magnetic force generated by an external voltage applied thereto, and
the controller is arranged to control a voltage supplied to the linking member in response to a scanning signal.

5. The multifunction peripheral as claimed in any preceding claim, wherein the driving unit comprises:
a driving motor;
a driving belt arranged to support the printing unit and drivabley move the printing unit using a driving force generated from the driving motor; and
a printing unit guide bar arranged to support and guide movement of the printing unit.

6. The multifunction peripheral as claimed in claim 5, wherein the scanning unit is arranged to be guided by a scanning unit guide bar disposed parallel to the printing unit guide bar.

7. The multifunction peripheral as claimed in any preceding claim, further comprising:
a transferring unit arranged to transfer the printing.

8. The multifunction peripheral as claimed in claim 7, wherein the transferring unit comprises:
a charging roller arranged to electrically charge the printing medium; and
an absorption belt arranged to move while in contact with the charging roller and to grip and transfer charged printing medium.

9. The multifunction peripheral as claimed in claim 4, wherein the printing unit is arranged to print multiple copies of the image onto the printing medium among two or more regions into which the printing medium is divided, wherein the printing unit is arranged to br moveable between each region at least once.

10. The multifunction peripheral as claimed in claim 9, wherein the printing unit is movable in a direction orthogonal to the direction in which the printing medium is movable.

11. A multifunctional apparatus consisting of a plurality of peripheral devices, comprising:
a linking unit arranged to selectively connect the plurality of peripheral devices together based on a signal to perform a function of one of the plurality of peripheral devices; and
a driving unit arranged to drive the plurality of peripheral devices in the connected state.

12. The apparatus of claim 11, wherein the plurality of peripheral devices comprise:
a printing unit arranged to print a predetermined image onto a printing medium; and
a scanning unit arranged to scan an image of a document placed on a document table.

13. A linking unit of a multifunctional apparatus with a plurality of peripheral devices, comprising:
a linking member arranged to selectively connect the plurality of peripheral devices; and
a controller arranged to control the linking member to connect the plurality of peripheral devices based on a signal to perform predetermined functions of the plurality of peripheral devices.

14. The linking unit of claim 13, wherein:
the linking member comprises an electromagnet arranged to selectively connect the plurality of peripheral devices by a magnetic force generated from a voltage applied thereto, and
the controller is arranged to control a voltage supplied to the linking member in response to a signal to perform one of the predetermined functions of the plurality of peripheral devices.

15. A method of performing printing and scanning functions in a multifunction peripheral, the method comprising:
moving a printing unit to print an image on a printing medium based on a received signal to perform the printing;
connecting a scanning unit to the printing unit based on a received signal to scan the image; and
moving the connected printing unit and scanning unit to scan an image from a document.
